# EUROPÄISCHE PATENTSCHRIFT

(11) **EP 3 216 113 B1**
(45) Veröffentlichungstag und Bekanntmachung des Hinweises auf die Patenterteilung: **27.11.2019**
(21) Anmeldenummer: 15760476.0
(22) Anmeldetag: 10.09.2015
(51) Int. Cl.: H02K 3/50, H02K 15/00, H02K 15/12

(54) **ROTOR ODER STATOR MIT GESTECKTEM FLACHEM WICKELKOPF**
ROTOR OR STATOR WITH SHORT NESTED WINDING HEADS
ROTOR OR STATOR AVEC TÊTE DE BOBINAGE EMBOÎTÉ COURTE

(30) Priorität: 05.11.2014 DE 102014222608
(43) Veröffentlichungstag der Anmeldung: 13.09.2017
(73) Patentinhaber: Robert Bosch GmbH, 70442 Stuttgart (DE)
(72) Erfinder: ERMER, Martin, 31139 Hildesheim (DE); KUDLEK, Alexander, 31199 Diekholzen (DE); SAUER, Wolfgang, 31199 Diekholzen (DE)
(86) Internationale Anmeldenummer: PCT/EP2015/070763
(87) Internationale Veröffentlichungsnummer: WO 2016/071026

(56) Entgegenhaltungen:
- WO-A1-2014/157621
- WO-A2-2011/006809
- DE-A1-102012 214 523
- US-A- 1 823 607
- US-A1- 2009 200 888
- US-A1- 2009 200 888
- US-A1- 2012 133 235
- US-A1- 2014 225 465

## Beschreibung

### Gebiet der Erfindung

Die Erfindung betrifft ein Bauelement für eine elektrische Maschine, wie etwa einen Stator oder einen Rotor.

### Hintergrund der Erfindung

Rotoren als auch Statoren von Elektromotoren umfassen Wicklungen, die bei Bestromung die zum Antrieb des Elektromotors notwendigen Magnetfelder erzeugen. Bei der Fertigung der Wicklungen in Stecktechnik werden Teilleiter in Nute oder Öffnungen im Stator bzw. im Rotor gesteckt, aus dem Paket herausragende Leiterabschnitte entsprechend der notwendigen Verschaltung verschränkt und mit einem verbindungstechnischen Verfahren miteinander elektrisch und mechanisch verbunden.

Die DE 199 56 347 A1 zeigt beispielsweise einen Rotor für eine elektrische Maschine mit gesteckten Teilleitern, die beispielsweise mittels Schweißen zu Leiterschleifen zusammengefügt sind.

Die aus dem Stator bzw. Rotor herausragenden Leiterabschnitte bilden dann einen sogenannten Wickelkopf, dessen Bauhöhe im Wesentlichen von folgenden Faktoren abhängt: der Länge der notwendigen Verschränkung, dem Lamellenschnitt, der Leiterdicke, der Anzahl der Teilleiter in der Nut, der Spulenweite, einem Zuschlag für Übergangsradien zwischen Stator bzw. Rotor und Mantelfläche, einem Zuschlag für die verwendete Verbindungstechnik, dem Teilkreisdurchmesser der Teilleiter und der Spulenweite der Spule.

Bei einem klassisch hergestellten Wickelkopf ergibt sich aus diesen Größen eine minimale Höhe, die aufgrund der gegebenen geometrischen Faktoren nicht unterschritten werden kann. Diese kann zu Nachteilen in Bezug auf Bauraum, Kosten und der möglichen Leistung des Elektromotors führen. Ein größerer notwendiger Bauraum verhindert den Einsatz des Motors in entsprechend bauraumbegrenzten Anwendungen. Durch die größere Länge entstehen bei vielen Bauteilen des Motors ebenfalls größere Längen und somit erhöhte Materialkosten. Durch das ungünstige Verhältnis von Wickelkopfhöhe zu aktiver Blechlänge entsteht aufgrund größerer Widerstände ein Leistungsverlust.

Aus den Patentschriften US 1 823 607 A, WO 2011/006809 A2, DE 102012214523 A1, WO 2014/157621 A1, US 2009/200888 A1, US 2014/225465 A1, US 2012/133235 A1 ist jeweils ein Bauelement für eine elektrische Maschine bekannt, das radial abgewinkelte Abschnitte von Teilleitern einer elektrischen Wicklung aufweist.

### Offenbarung der Erfindung

Ausführungsformen der vorliegenden Erfindung können in vorteilhafter Weise ermöglichen, die axiale Baulänge einer elektrischen Maschine zu verkürzen. Damit kann eine elektrische Maschine mit geringem Bauraum, niedrigen Kosten und hoher Leistungsdichte bereitgestellt werden.

Ein erster Aspekt der Erfindung betrifft ein Bauelement für eine elektrische Maschine, beispielsweise einen Elektromotor oder einen Generator. Das Bauelement kann ein Stator oder ein Rotor der elektrischen Maschine sein. Weiter kann das Bauelement aus einer Mehrzahl von Blechlamellen mit im Wesentlichen gleicher Kontur zusammengesetzt sein, die Nuten oder Öffnungen aufweisen, in die dann die Teilleiter zum Bilden von Wicklungen eingesteckt werden können.

Erfindungsgemäß umfasst das Bauelement einen magnetisch leitfähigen Kern mit einer Mehrzahl von Öffnungen, die entlang einer axialen Richtung des Kerns verlaufen, und mehrere Teilleiter, die in den Öffnungen in axialer Richtung verlaufen, um bei Bestromung in dem magnetisch leitfähigen Kern ein Magnetfeld zu erzeugen. Dabei ist zu verstehen, dass die axiale Richtung durch die Drehachse der Maschine (bzw. des Rotors) definiert werden kann. Der magnetisch leitfähige Kern kann aus Blechlamellen aufgebaut sein. Die Teilleiter können elektrisch leitfähige Stangen bzw. Drähte mit beliebigen Durchmessern sein.

Die Teilleiter sind in die Öffnungen gesteckt und sind zu wenigstens einer Wicklung verbunden, indem Enden der Teilleiter miteinander verbunden wurden.

In der Regel werden die Teilleiter vor dem Einstecken U-förmig gebogen, so dass sie in benachbarte Öffnungen eingesteckt werden können. Anschließend werden die gegenüberliegenden Enden gebogen und entsprechend der gewünschten Verschaltung der Wicklungen miteinander verschweißt, verlötet usw.

Abschnitte der Teilleiter, die die miteinander verbundenen Enden aufweisen und die aus einer Stirnseite des magnetisch leitfähigen Kerns herausragen, sind dabei zur Bildung eines Wickelkopfes in eine radiale Richtung abgewinkelt. Mit anderen Worten kann ein erster Teil dieser Abschnitte in axialer Richtung aus dem Kern herausstehen und anschließend ein zweiter Teil in radialer Richtung verlaufen. Es ist zu verstehen, dass der zweite Teil dabei auch in Umfangsrichtung verlaufen kann, beispielsweise um eine Verschränkung der Leiterenden zu erreichen.

Auf diese Weise kann die axiale Baulänge eines Stator- oder Rotorwickelkopfes von elektrischen Maschinen durch eine flache Wickelkopfform im Stecktechnik-Herstellverfahren verkürzt werden.

"Radial abgewinkelt" kann im Allgemeinen bedeuten, dass der Abschnitt in einer Ebene, in der sich der Abschnitt erstreckt und die parallel zur axialen Richtung verläuft, einen Winkel von im Wesentlichen 90° aufweist, beispielsweise einen Winkel zwischen 85° und 100°.

Gemäß einer Ausführungsform der Erfindung ragen die Abschnitte in axialer Richtung aus der Stirnseite des Kerns heraus und verlaufen anschließend parallel zu dieser Stirnseite. Beispielsweise können die zunächst geraden Abschnitte über ein Werkzeug gebogen werden, das die Bildung eines rechtwinkligen Knies unterstützt.

Erfindungsgemäß sind die Abschnitte von einer Achse der elektrischen Maschine weggebogen. Im Allgemeinen ist es möglich, dass die Abschnitte zur Drehachse hin gebogen werden oder davon weg. Werden die Abschnitte nach außen gebogen, kann dies das Verschränken und/oder das Verbinden der Leiterenden (beispielsweise durch eine bessere Zugänglichkeit) erleichtern.

Ein ringförmiger Stator kann beispielsweise innen liegende Nuten als Öffnungen aufweisen, an die sich radial weiter außen ein ringförmiges Joch anschließt. Die Leiterabschnitte sind dann radial nach außen über das Joch gebogen.

Beispielsweise können die Leiterabschnitte des Wickelkopfes kurz über der letzten Lamelle, die die Stirnseite des Kerns bereitstellt, rechtwinklig oder beinahe rechtwinklig abgebogen werden und dann in Richtung Joch verlaufen. Diese Leiterabschnitte können dann gemäß der notwendigen Verschaltung der elektrischen Maschine parallel oder beinahe parallel zu der Endlamelle gebogen sind, so dass deren Enden miteinander verbunden werden können.

Die in Richtung Joch abgeknickte Form des Wickelkopfes führt zu einer Längenverkürzung in axialer Richtung. Durch den kleineren Bauraum kann bei gleicher Performance eine kleinere Baugröße realisiert werden. Bei gleicher aktiver Baulänge wird die Gesamtbaulänge verkürzt und entsprechend weniger Material für Gehäuse, Paket, Läufer, Ständer, Welle, ... benötigt, was zu einer Kostenreduktion führen kann. Durch die Verkürzung der Wickelköpfe kann bei gleicher Baugröße eine bessere Performance erreicht werden.

Erfindungsgemäß weist der Wickelkopf wenigstens zwei schichtförmige Lagen aus radial abgewinkelten Abschnitten von Teilleitern auf. Eine erste Lage umfasst dann beispielsweise die Abschnitte, deren axial verlaufende Teile näher an der Drehachse liegen, wobei eine weitere, zweite Lage die Abschnitte umfasst, deren axial verlaufende Teile weiter von der Drehachse entfernt sind. In jeder Lage verlaufen dann die zweiten, radial ausgerichteten Teile der Leiterabschnitte dann im Wesentlichen parallel und/oder können zur Verschränkung gleichartig in Umfangsrichtung gebogen sein.

Erfindungsgemäß ist ein erster Abschnitt aus einer ersten Lage in eine Umfangsrichtung des Bauelements gebogen, so dass er gegenüber einem zweiten Abschnitt aus einer zweiten Lage, mit dem der erste Abschnitt verbunden ist, derart verschränkt ist, dass ihre Enden miteinander verbunden werden können.

Gemäß einer Ausführungsform der Erfindung umfasst der magnetisch leitfähige Kern ein ringförmiges Joch, auf dem die Öffnungen als Nuten bereitgestellt sind. Die abgewinkelten Abschnitte der Teilleiter können von den Öffnungen aus entlang des Jochs verlaufen. Die miteinander verbundenen Enden der Teilleiter können dann so angeordnet werden, dass sie in radialer Richtung nicht über das Joch hinausragen.

Gemäß einer Ausführungsform der Erfindung sind die abgewinkelten Abschnitte um ein Stützelement gebogen, das das Bauelement ringförmig umläuft. Beispielsweise können die Abschnitte anstatt um ein Werkzeug um ein verbleibendes Stützelement gebogen werden, das beispielsweise bei einem Rotor die Abschnitte gegenüber Fliehkräften abstützen kann.

Gemäß einer Ausführungsform der Erfindung sind die abgewinkelten Abschnitte aus dem Wickelkopf in eine Vergussmasse eingebettet. Diese Vergussmasse kann die Abschnitte mechanisch unterstützen und/oder elektrisch isolieren.

Ein weiterer, nicht erfindungsgemäßer Aspekt betrifft ein Verfahren zum Herstellen eines Bauelements für eine elektrische Maschine, beispielsweise eines Bauelements, so wie es obenstehend und untenstehend beschrieben ist.

Das Verfahren umfasst: Bereitstellen eines magnetisch leitfähigen Kerns mit einer Mehrzahl von Öffnungen, die entlang einer axialen Richtung des Kerns verlaufen; Einstecken mehrerer Teilleiter in die Öffnungen, so dass die Teilleiter in axialer Richtung verlaufen; Abwinkeln von Abschnitten der Teilleiter, die aus einer Stirnseite des magnetisch leitfähigen Kerns herausragen, in einer radialen Richtung zur Bildung eines Wickelkopfes; und Verbinden der Enden der Abschnitte. Beispielsweise kann das Verbinden über Schweißen, wie etwa Diffusionsschweißen, und/oder Löten erfolgen.

Das Herstellverfahren kann bei allen Statoren und Rotoren, die im Stecktechnikverfahren hergestellt sind, angewendet werden. Einsatzgebiete für das Verfahren und für das Bauelement können beispielsweise Lenkmotoren, Generatoren, Hybridantriebe, Startermotoren und andere elektrische Antriebsmaschinen sein.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine schematische Ansicht in axialer Richtung auf ein Bauelement für eine elektrische Maschine gemäß einer Ausführungsform der Erfindung.
Fig. 2 zeigt einen schematischen Längsschnitt durch ein Bauelement für eine elektrische Maschine gemäß einer Ausführungsform der Erfindung.

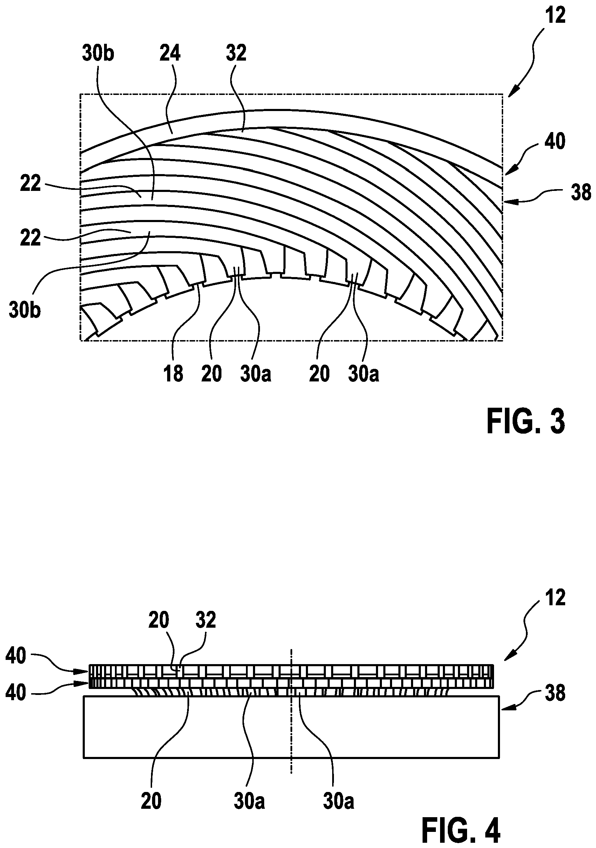

Fig. 3 zeigt eine schematische Ansicht in axialer Richtung auf ein Bauelement für eine elektrische Maschine gemäß einer Ausführungsform der Erfindung.
Fig. 4 zeigt eine schematische Seitenansicht eines Bauelements für eine elektrische Maschine gemäß einer Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

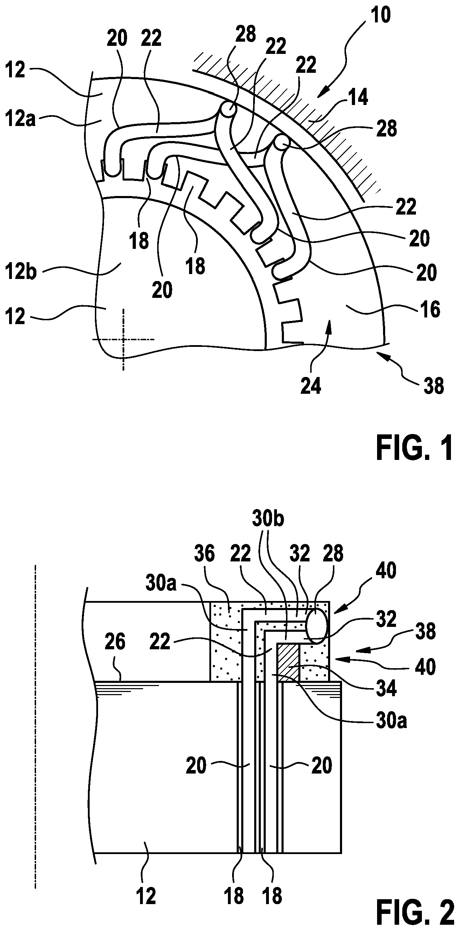

Fig. 1 zeigt einen Ausschnitt aus einer elektrischen Maschine 10, bei der ein Bauelement 12 in der Form eines Stators 12a innerhalb eines Gehäuses 14 angeordnet ist. Innerhalb des Stators 12a kann ein Rotor 12b drehbar im Gehäuse 14 gelagert sein.

Der Stator 12a umfasst einen Kern 16 aus Blechlamellen, in dem Öffnungen 18 in der Form von Nuten ausgebildet sind, die in einer axialen Richtung (d.h. parallel zur Drehachse des Rotors 12b) verlaufen. In den Öffnungen 18 sind Teilleiter 20 angeordnet, die die Statorwicklungen bilden. Die Teilleiter 20, beispielsweise Kupferdrähte oder Kupferstangen, können einen runden, rechteckigen und/oder konischen Querschnitt aufweisen. Die Querschnitte können dabei durchgängig sein oder sich entlang des Teilleiters 20 verändern.

Innerhalb der Öffnungen 18 verlaufen die Teilleiter 20 in axialer Richtung, die Abschnitte 22, die aus dem Kern 16 herausragen, sind abgewinkelt und verlaufen in radialer Richtung.

Die Öffnungen 18 des Stators sind an einer Innenseite des Kerns 16 gebildet, der radial weiter außen ein ringförmiges Joch 24 aufweist, an dessen Stirnseite 26 die Abschnitte 22 der Teilleiter 20 verlaufen. Die Abschnitte 22 verlaufen dabei nicht nur in radialer Richtung, sondern sind auch in Umfangsrichtung gebogen, so dass zwei Abschnitte 22 entsprechend der Verschaltung der elektrischen Maschine 10 mit einer elektrisch leitfähigen Verbindungsstelle 28 verbunden werden können. Im Allgemeinen können auch mehrere Teilleiter 20 zueinander verschränkt sein und deren Enden sich an der Verbindungsstelle 28 befinden.

Auch der Rotor 12b kann analog dem Stator 12a aufgebaut sein, d.h. entsprechend gebogene und entsprechend verbundene Teilleiter in Öffnungen aufweisen. Alternativ kann der Rotor lediglich Permanentmagnete oder einen leitfähigen Käfig (für einen Käfigläufermotor) umfassen.

Die Fig. 2 zeigt ein Bauelement 12 (beispielspeise einen Stator12a oder einen Rotor 12b) schematisch im Querschnitt. Es ist zu erkennen, dass jeder der Abschnitte 22 in einem ersten Teil 30a in axialer Richtung verläuft und dann nach einem Knick von etwa 90° in einem zweiten Teil 30b in einer Richtung parallel zu der Stirnfläche 26 in radialer Richtung verläuft.

Die Enden 32 von verbundenen Teilleitern 20 befinden sich in axialer Richtung übereinander.

Weiter ist in der Fig. 2 zu erkennen, dass die Abschnitte 22 um ein Stützelement 34 abgewinkelt sein können, das beispielsweise das Bauelement 12 ringförmig umläuft und die Abschnitte 22 abstützt. Das Stützelement 34 kann sich am Außendurchmesser der Teile 30a der Abschnitte 22 befinden und/oder kann eine Armierung zur Aufnahme von Fliehkräften sein. Das Stützelement 34 kann auch eine Abstützung der Abschnitte 22 sein und diese auf der Stirnseite 26 abstützen (beispielsweise als Ring zum Schutz der Abschnitte 22 beim Überbiegen).

Weiter können die Abschnitte 22 in eine Vergussmasse 36 eingebettet sein.

Oberhalb der Stirnseite 26 kann sich eine Isolation aus Papier oder Kunststoff befinden, die aus der jeweiligen Öffnung 18 herausragt und die Leiter 20 einzeln umgeben kann.

In den Fig. 1 und 2 sind aus Gründen der Übersichtlichkeit lediglich wenige Teilleiter 20 bzw. abgewinkelte Abschnitte 22 gezeigt. Normalerweise befindet sich an der Stirnseite 26 ein Wickelkopf 38 aus einer Vielzahl von Abschnitten 22.

In der Fig. ist eine Draufsicht auf einen derartigen Wickelkopf 38 gezeigt, der in der Fig. 5 als Seitenansicht gezeigt ist. Dadurch, dass die Abschnitte 2 radial verlaufen, ist der Wickelkopf 38 scheibenförmig ausgebildet. Die Abschnitte 22 der Teilleiter 20 zeigen bei der Austrittsstelle aus der Öffnung 18 zuerst in Richtung Stator- bzw. Rotor-Längsachse und dann in Richtung des Jochs 24. Die Abschnitte 22 verlaufen bogenförmig oder beinahe bogenförmig im Wickelkopf 38.

Die Abschnitte 22 befinden sich in zwei scheibenförmigen Lagen 40, wobei Abschnitte 22 aus der einen Lage 40 mit Abschnitten aus der anderen Lage 40 verbunden sind. Die verschränkten Abschnitte 22 aus verschiedenen Lagen 40 befinden sich übereinander und nebeneinander.

Insgesamt ist zu verstehen, dass auch beide Seiten des Bauelements 12 mit einem derartigen Wickelkopf 38 versehen sein können. Im Wickelkopf 38 können sich zusätzlich auch einseitig oder beidseitig Sonderverbindungselemente (z.B. Phasenanschlüsse, Umkehrverbinder, Sternpunktverbinder) befinden.

Das Bauelement 12 kann beispielsweise folgendermaßen hergestellt werden:
Zunächst wird ein magnetisch leitfähiger Kern 16 bereitgestellt, der beispielswiese aus einer Vielzahl von Blechlamellen aufgebaut ist.

In diesen Kern 16 werden die Teilleiter 20 in die Öffnungen 18 eingesteckt, so dass die Teilleiter 20 in axialer Richtung verlaufen. Die Teilleiter 20 können als U-Elemente oder als einzelne Stäbe hergestellt und bereitgestellt werden.

Danach werden die Abschnitte 22 der Teilleiter 20, die aus einer Stirnseite 26 des Kerns 16 herausragen, in einer radialen Richtung zur Bildung des Wickelkopfes 38 abgewinkelt. Dies kann beispielsweise mittels eines Werkzeugs und/oder über das Stützelement 34 geschehen. Die Abschnitte 22 werden dabei auch in Umfangsrichtung wie gewünscht verschränkt.

Anschließend werden die Enden 32 der Abschnitte 22 verbunden. Dies kann beispielsweise über Schweißen oder Löten erfolgen. Die Leiterenden 32 können als Vorbereitung für das Verbindungsverfahren metallisch beschichtet worden sein. Auch können die Leiterenden 32 durch ein geeignetes Verfahren von ihrer Lackisolation befreit worden sein. Die Leiterenden 32 können aber auch mit einem Verbindungsverfahren miteinander verbunden werden, das keiner Entfernung der Isolation bedarf.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Bauelement (12) für eine elektrische Maschine (10), das Bauelement (12) umfassend:
einen magnetisch leitfähigen Kern (16) mit einer Mehrzahl von Öffnungen (18), die entlang einer bezüglich einer Drehachse der elektrischen Maschine axialen Richtung des Kerns (16) verlaufen;
eine Wicklung mit mehreren Teilleitern (20), die in den Öffnungen (18) in axialer Richtung verlaufen, um bei Bestromung in dem magnetisch leitfähigen Kern (16) ein Magnetfeld zu erzeugen;
wobei die Teilleiter (20) in die Öffnungen (18) gesteckt und Enden (32) der Teilleiter (20) miteinander verschweißt oder verlötet sind;
wobei dieTeilleiter (20) Abschnitte (22) aufweisen, die aus einer Stirnseite (26) des magnetisch leitfähigen Kerns (16) herausragen und die miteinander verbundene Enden (32) aufweisen,
wobei
die Teilleiter (20) als U-förmige Elemente oder als einzelne Stäbe einer Wicklung in Stecktechnik ausgebildet sind, **dadurch gekennzeichnet, dass** die Abschnitte (22) der Teilleiter (20) zur Bildung eines Wickelkopfes (38) in eine radiale Richtung von der Drehachse der elektrischen Maschine (10) weg abgewinkelt sind, dass der Wickelkopf (38) zwei oder mehr schichtförmige Lagen (40) aus radial abgewinkelten Abschnitten (22) von Teilleitern (20) aufweist, dass ein Abschnitt (22) aus einer ersten Lage (40) in eine Umfangsrichtung des Bauelements (12) gebogen ist, so dass er gegenüber einem mit ihm verbundenen Abschnitt (22) aus einer zweiten Lage (40) derart verschränkt ist, dass ihre Enden (32) miteinander
verbindbar sind,
und dass bezogen auf einen Querschnitt des Wickelkopfes (38) jeder der Abschnitte (22) in die radiale Richtung abgewinkelt ist.

2. Bauelement (12) nach Anspruch 1,
wobei die Abschnitte (22) in axialer Richtung aus der Stirnseite (26) herausragen und anschließend parallel zu der Stirnseite (26) verlaufen.

3. Bauelement (12) nach einem der vorhergehenden Ansprüche,
wobei der magnetisch leitfähige Kern (16) ein ringförmiges Joch (24) umfasst, auf dem die Öffnungen (18) als Nuten bereitgestellt sind; und/oder wobei die abgewinkelten Abschnitte (22) der Teilleiter (20) von den Öffnungen (18) entlang des Jochs (24) verlaufen und die verbunden Enden (32) nicht über das Joch (24) hinausragen.

4. Bauelement (12) nach einem der vorhergehenden Ansprüche,
wobei die abgewinkelten Abschnitte (22) um ein Stützelement (34) gebogen sind.

5. Bauelement (12) nach einem der vorhergehenden Ansprüche,
wobei die abgewinkelten Abschnitte (22) aus dem Wickelkopf (38) in eine Vergussmasse (36) eingebettet sind.

6. Bauelement (12) nach einem der vorhergehenden Ansprüche,
wobei das Bauelement ein Stator (12a) ist; oder
wobei das Bauelement ein Rotor (12b) ist.

## Claims

1. Component (12) for an electric machine (10), the component comprising:
a magnetically conductive core (16) having a plurality of openings (18), which extend along an axial direction of the core (16) with respect to an axis of rotation of the electric machine,
a winding having a number of sub-conductors (20), which extend in the openings (18) in the axial direction, in order to generate a magnetic field in the magnetically conductive core (16) when a current is applied;
wherein the sub-conductors (20) are inserted in the openings (18) and ends (32) of the sub-conductors (20) are welded or soldered to one another;
wherein the sub-conductors (20) have portions (22) which protrude out of an end face (26) of the magnetically conductive core (16) and have ends (32) which are connected to one another,
wherein
the sub-conductors (20) are formed as U-shaped elements or as individual bars of a winding based on the plug-in technique, **characterized in that** the portions (22) of the sub-conductors (20) are angled away in a radial direction from the axis of rotation of the electric machine (10) to form a winding overhang (38), **in that** the winding overhang (38) has two or more laminar layers (40) of radially angled-away portions (22) of sub-conductors (20), **in that** a portion (22) from a first layer (40) is bent out in a circumferential direction of the component (12), so that it is transposed with respect to a portion (22), connected to it, from a second layer (40) in such a way that their ends (32) can be connected to one another,
and **in that** each of the portions (22) is angled away in the radial direction with respect to a cross section of the winding overhang (38).

2. Component (12) according to Claim 1,
wherein the portions (22) protrude out of the end face (26) in the axial direction and subsequently extend parallel to the end face (26).

3. Component (12) according to one of the preceding claims,
wherein the magnetically conductive core (16) comprises an annular yoke (24), in which the openings (18) are provided as slots; and/or
wherein the angled-away portions (22) of the sub-conductors (20) extend from the openings (18) along the yoke (24) and the connected ends (32) do not protrude beyond the yoke (24).

4. Component (12) according to one of the preceding claims,
wherein the angled-away portions (22) are bent around a protective element (34).

5. Component (12) according to one of the preceding claims,
wherein the angled-away portions (22) from the winding overhang (38) are embedded in a potting compound (36).

6. Component (12) according to one of the preceding claims,
wherein the component is a stator (12a); or
wherein the component is a rotor (12b).

## Revendications

1. Composant (12) destiné à une machine électrique (10), le composant (12) comprenant :
un noyau magnétiquement conducteur (16) pourvu d'une pluralité d'ouvertures (18) s'étendant dans une direction axiale du noyau (16) par rapport à un axe de rotation de la machine électrique ;
un enroulement pourvu d'une pluralité de sous-conducteurs (20) s'étendant dans les ouvertures (18) dans la direction axiale pour générer un champ magnétique lorsqu'un courant circule dans le noyau magnétiquement conducteur (16) ;
les sous-conducteurs (20) étant insérés dans les ouvertures (18) et des extrémités (32) des sous-conducteurs (20) étant soudées ou brasées les unes aux autres ;
les sous-conducteurs (20) comportant des parties (22) qui font saillie d'une face d'extrémité (26) du noyau magnétiquement conducteur (16) et qui comportent des extrémités (32) reliées les unes aux autres,
les sous-conducteurs (20) étant conçus comme des éléments en forme de U ou comme des barres individuelles d'un enroulement dans une technologie d'enfichage, **caractérisé en ce que**
les parties (22) des sous-conducteurs (20) sont coudées dans une direction radiale depuis l'axe de rotation de la machine électrique (10) pour former une tête d'enroulement (38),
la tête d'enroulement (38) comporte au moins deux niveaux (40), en forme de couches, de parties (22), coudées radialement, de sous-conducteurs (20),
une partie (22) formée d'un premier niveau (40) est pliée dans une direction périphérique du composant (12) de manière à être croisée par rapport à une partie (22), connectée à celui-ci, d'un deuxième niveau (40) de sorte que leurs extrémités (32) puissent être reliées l'une à l'autre, et
chacune des parties (22) est coudée dans la direction radiale par rapport à une section transversale de la tête d'enroulement (38).

2. Composant (12) selon la revendication 1,
les parties (22) faisant saillie de la face d'extrémité (26) dans la direction axiale et s'étendant ensuite parallèlement à la face d'extrémité (26).

3. Composant (12) selon l'une des revendications précédentes,
le noyau magnétiquement conducteur (16) comprenant une culasse annulaire (24) dans laquelle les ouvertures (18) sont ménagées sous forme de gorges ; et/ou les parties coudées (22) des sous-conducteurs (20) s'étendant depuis les ouvertures (18) le long de la culasse (24) et les extrémités reliées (32) ne faisant pas saillie de la culasse (24).

4. Composant (12) selon l'une des revendications précédentes,
les parties coudées (22) étant pliées autour d'un élément de support (34).

5. Composant (12) selon l'une des revendications précédentes,
les parties coudées (22) sortant de la tête d'enroulement (38) étant noyées dans un composé d'enrobage (36).

6. Composant (12) selon l'une des revendications précédentes,
le composant étant un stator (12a) ; ou
le composant étant un rotor (12b).
